# EUROPEAN PATENT SPECIFICATION

(11) **EP 1 322 573 B1**
(45) Date of publication and mention of the grant of the patent: **27.02.2008**
(21) Application number: 01961463.5
(22) Date of filing: 23.08.2001
(51) Int. Cl.: C05F 17/02

(54) **A COMPOSTING APPARATUS WITH INTERNAL TRANSPORT SYSTEM**
KOMPOSTIERGERÄT MIT INTERNEM TRANSPORTSYSTEM
APPAREIL DE COMPOSTAGE MUNI D'UN SYSTEME DE TRANSPORT INTERIEUR

(30) Priority: 23.08.2000 NZ 50582900
(43) Date of publication of application: 02.07.2003
(73) Proprietor: Prambhl Limited, Christchurch (NZ)
(72) Inventor: ROBINSON, Peter William, Christchurch (NZ); WORTH, Gillian Helen, Christchurch (NZ); TAYLOR, Murray Edwin, Christchurch (NZ); WATSON, Julian Mark, Canterbury (NZ)
(74) Representative: Garratt, Peter Douglas
(86) International application number: PCT/NZ2001/000171
(87) International publication number: WO 2002/016288

(56) References cited:
- EP-A- 1 076 051
- EP-A- 1 153 902
- WO-A-97/12031
- US-A- 5 169 782
- DATABASE WPI Week 200114, Derwent Publications Ltd., London, GB; Class C04, AN 2001-128039, XP002966084 & JP 2000 313684 A (GOLD KOSAN KK) 14 November 2000
- DATABASE WPI Week 199916, Derwent Publications Ltd., London, GB; Class D16, AN 1999-18359, XP002966085 & JP 11 021 191 A (KUBOTA CORP) 26 January 1999
- DATABASE WPI Week 199550, Derwent Publications Ltd., London, GB; Class D16, AN 1995-389062, XP002966086 & JP 7 265 842 A (OKAYAMAKEN KENKYU KAIHATSU KYODO KUMIAI) 17 October 1995
- DATABASE WPI Week 198418, Derwent Publications Ltd., London, GB; Class D16, AN 1984-110283, XP002966087 & JP 59 050 089 A (HITACHI CHEMICAL KK) 22 March 1984
- DATABASE WPI Week 198747, Derwent Publications Ltd., London, GB; Class C04, AN 1987-329661, XP002966088 & HU 43 311 A (GER B ET AL.) 28 October 1987
- DATABASE WPI Week 200006, Derwent Publications Ltd., London, GB; Class D16, AN 2000-065585, XP002966089 & JP 11 292 667 A (GOLD HAKKO GIJUTSU KENKYUSHO KK) 22 March 1984

## Description

### Field of the Invention

The invention relates to composting and particularly to a composting system for organic and other putrescible waste materials of domestic, commercial, agricultural or industrial origin.

### Background to the Invention

Composting is an aerobic microbiological process by which putrescible organic material is degraded into humus material suitable for use as a soil conditioner, fertiliser or similar product. Adequate air must be supplied to the composting material for this to occur. The heat generated during the process serves to disinfect the material of any pathogens and against germination of most seeds contained within the material.

There are four main types of composting systems that have been devised for commercial purposes, however hybrid systems are also available. The four main systems can be categorised as follows:

A windrow system: this is an open system and the material to be composted is piled in long rows. These are either aerated by forced convection or by frequent turning using a mechanical agitator system.

An enclosed static stack system: air is forced up through a pile of the material to be composted, which is enclosed in some type of vessel. This is a batch process in which the vessel is loaded and unloaded once for each composting cycle.

An agitated bay system: these systems primarily utilise U-shaped channels or bays. Material to be composted is often added semi-continuously and periodically agitated and moved by mechanical means. However, primary aeration is often achieved via forced air movement.

Continuous or semi-continuous in-vessel composting systems: In these systems the material to be composted is fed in one end (side, top or bottom) of the composting system and exits continuously from another.

Numerous examples of the above systems are currently being produced and include the Rotocom^{™} and the VCU^{™} systems as well as examples illustrated in "The Practical Handbook of Compost Engineering", Roger T Haug, Lewis Publishers, 1993 (ISBN 0-87371-373-7).

Rotocom^{™} (manufactured under licence by ADM Group in New Zealand), Dano, Eweson (Bedminster Bioconversion Corporation), Voest-Alpine and Buhler Inc are all examples of horizontal flow rotary drum systems. These systems are based on a cylinder that rotates around its long axis. The rotation of the cylinder facilitates mixing and aeration, internal flights may move the material along the cylinder.

The VCU^{™} is a continuous vertical system and is described in Patent Specification No. PCT/NZ98/00107. This unit is similar in principle to other vertical flow, agitated solid bed systems such as those produced by Dambach-Schnorr, Krupp-Varro and NGK. The composting mix is fed in at the top and falls out through a grate at the bottom, aeration can be provided passively or by an extractor or vacuum fan at the top of the stack.

Other systems are based on a stationary cylinder with an internal and fully continuous screw mechanism [JP2000313684, JP7265842 JP7039851]. These either treat the material in a batch or continuous process. Another type of system incorporates a series of central shafts inside a cylinder. From each shaft extend at least two series of fingers, diametrically opposed, that are used to agitate the mix, which is being composted, then dried through the incorporation of hot air in a batch process [US 4,411,682]. A number of systems use either flights about a central shaft or a screw to knead or compress and therefore dewater the material being composted [JP11021191, JP9077583].

An object of the present invention is to provide an in-vessel, continuous, and generally horizontal composting system, which provides an efficient alternative to existing composting systems.

### Summary of the Invention

According to an aspect of the invention there is provided a composting system including a substantially horizontal composting chamber constructed as a stationary, covered channel which is fully enclosed or a stationary, substantially cylindrical vessel, the chamber being adapted so that air emissions from within the chamber can be controlled, the chamber including an internal transport system which conveys composting material from one end of the chamber to the other in a continuous or batch process, the transport system is based on a substantially central shaft, or series of shafts substantially about the centre of the chamber which have a series of discrete arms that extend into the outer volume of the chamber, the discrete arms being arranged in a helical fashion about the shaft(s) such that when the shaft(s) are rotated they move the material in one direction or the other along the chamber, depending on the direction of rotation of the shaft(s), the transport system being under the control of a microprocessor based system which records inputs from various probes about the chamber which determine the optimal air speed as a function of the headspace air temperature and gaseous content in the chamber.

The chamber can be of a horizontal generally cylindrical shape or an open channel. If the system is based on an open channel then it has a cover to ensure adequate control of the emission of air from the chamber. Through the middle (this may be on or off-centre) of the chamber may be a shaft or shafts to which are attached a series of discrete arms, appendages or flutes (henceforth referred to simply as arms) that extend into the outer volume of the composting chamber. The geometric placement of the arms and the overall structure being adapted to mix and agitate the composting material placed in the inlet, to allow air to permeate into a composting mix by opening up the structure of the material, and transport the compost material to the outlet at the other end of the chamber while the material composts and biodegrades in the chamber.

The arms and the shaft can be made of metal or plastic or some composite material (e.g. epoxy-fibreglass). Each shaft is supported at each end by means of a bearing in an endplate fixed to the chamber. Each shaft can be supported additionally along the length of the composting system through one or more bearing support mechanisms.

The arms serve to mix the composting mass, to break up any agglomerates in the composting mass, allow air to penetrate into the composting material and to release water through the emission of steam. The arms transport the composting material from one end of the composting chamber to the other while it undergoes an aerobic composting process. The arms may be moved, continuously or discontinuously, in combinations of a clockwise or anticlockwise direction, which aids in mixing and is used to control the residence time of the composting mix within the composting chamber.

The chamber can be constructed from a single insulating and structurally sound material or from two or more layers of material, at least one of which provides insulation.

The chamber can be unheated and the efficacy of the system relies on controlling the heat naturally produced in the composting process.

The drive system can be an electric motor(s) coupled to a reduction gearbox/es).

The internal transport system is designed so that the appendages serve to mix the incoming composting material, to break up any agglomerates within the material and "fold" air into the composting material.

The composting system can be run as a batch process by filling the chamber and then equalising the movement of the shaft(s) in the opposing directions and by closing off the exit end of the system.

The combinations of movement in opposite directions of the internal transport system serve to control the residence time of the material within the chamber and therefore control the specifications of the material exiting from the system.

The composting system includes a provision for air to be drawn over the mix, in addition to the air introduced into the mix via the transport system, in a direction counter to the general flow of the material to avoid re-infection of the composted material by pathogens contained within the unprocessed feed material and to avoid reintroducing moisture into the composted material from steam being conducted by the airflow.

The chamber can be installed such that the exit end is higher than the inlet end with a minimum gradient of 1:100.

The composting system can include a feed system used to present the material to be composted to the inlet of the chamber and another system used to remove the compost from the exit area of the chamber. The feed system can consist of an auger(s) or conveyor(s). The exit system can be an auger(s) or conveyor(s) or a bin that is regularly emptied via other means.

The composting system can incorporate a number of probes through the exterior of the chamber and extending into the headspace of the chamber, or into the composting mix, in order to measure temperature and carbon dioxide and other gas levels within the chamber.

The composting system can be controlled by a microprocessor based system, such as a PLC or computer, with data recording capabilities. The microprocessor based system incorporates software written for the specific purpose which records the input from the various probes about the chamber. The microprocessor can monitor the current of the drive motor(s) to ensure that the torque of the transport system does not exceed the specifications of the transport system and drive mechanism and this system controls the movement and direction of the internal transport system and infeed system to the compost and optionally it can control any exit system used to convey the material away from the chamber.

The microprocessor system can also control the air speed of the air flowing over the composting material by the control of the speed of a fan, or a valve/diaphragm on the air exhaust.

The control system can be operated remotely using software expressly written for the purpose. When the control system is operated remotely via a centralised system, which controls a number of sites, the centralised system can provide feedback on composting conditions to operators and it can, using software expressly written for the purpose, use the parameters recorded from the chamber(s) to automatically regulate the residence time(s) and therefore the specifications of the composted material(s).

Further aspects of the invention will become apparent from the following description, which is given by way of example only.

### Description of the Drawings

An example of the invention will now be described with reference to the accompanying drawings in which:
**Figure 1** shows a perspective view from an inlet end of an example of continuous composting unit according to the invention with part of its sidewall removed to show the interior of the chamber;
**Figure 2** shows a perspective view of part of the outlet end of the composting unit shown in Figure 1;

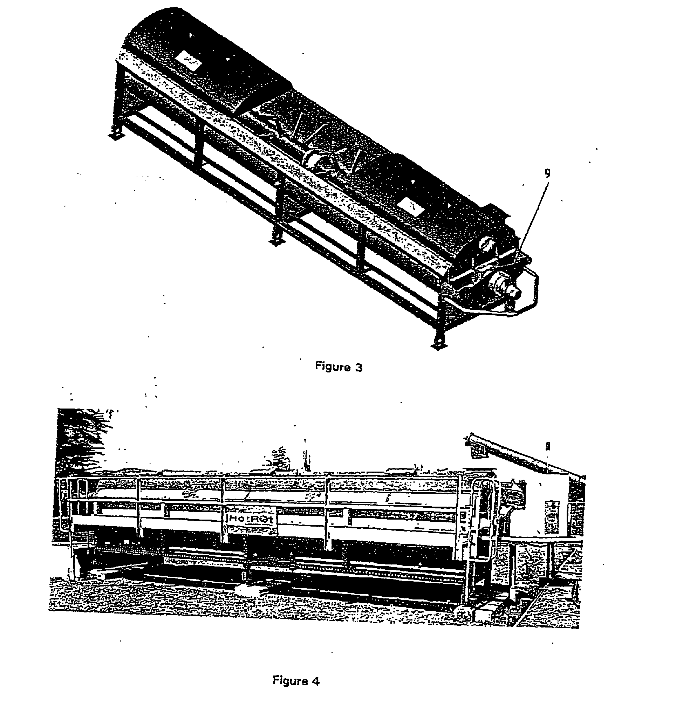

**Figure 3** shows by way of example a CAD perspective of a commercial composting unit according to the invention; and
**Figure 4** shows by way of example a side elevation view of a commercial installation of a composting unit according to the invention.

### Description of the Preferred Examples

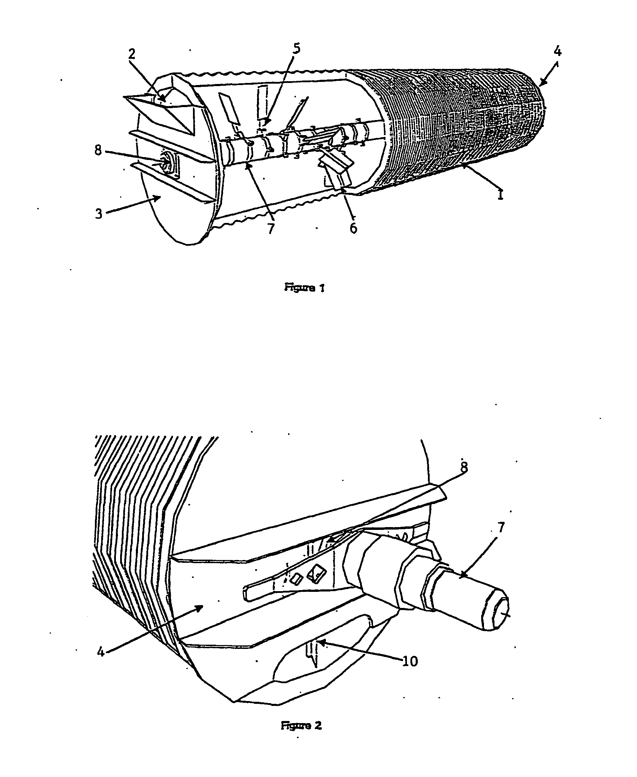

In the example shown in Figures 1 and 2 the chamber generally indicated by arrow 1 is unheated. The composting process generates heat and a requirement of the chamber's construction is that it minimises the loss of heat from the composting material. The chamber 1 can be constructed from material that can be metal (steel, iron, stainless steel, aluminium, etc), plastic, concrete or some composite material. There can be either an air gap between two skins or the chamber 1 can have an additional insulating material. Alternatively the chamber 1 may be made from a single layer of material, which is sufficiently rigid to maintain its shape while having good insulation properties in order to minimise the loss of heat generated during the composting process.

The material to be composted is fed in to a feed chute 2 at one end 3 of the composting chamber 1 via an auger/s, conveyor/s or manual system (loader, etc), (not shown). The composted material exits from the opposite and outlet end of the composting chamber 4 to either be collected in a container or fed directly onto a material transportation system (e.g. conveyor or auger, etc), (not shown). The chamber is mounted so that the bottom of the chamber rises slightly from the entrance to the exit. This is essential in order to avoid any leachate, formed during the composting process, re-contaminating the material exiting the system.

During its passage through the composting chamber 1 the mix will increase in temperature to in excess of 50°C through the natural microbial action within the material. This is necessary to disinfect and stabilise the material. Alternatively, heat can be added from an external source to accelerate the process, or in instances where the composter is sited in a very cold climate.

Adequate aeration may be provided, simply though the movement of arms as described below. Air can be passed within a headspace of the chamber 1 (i.e. above the composting mix) in a direction counter-current to the movement of the compost material. In addition air can be forced through the material from ports (not shown) in the wall or base of the composting chamber 1 or ports in a shaft of the transport mechanism. The introduction of airflow aids in the removal of water from the system as steam and provides oxygen for the composting process.

The arms generally indicated by arrow 5 can consist of paddles, tines or some similar member 6 projecting from a shaft or shafts 7 into the outer area of the composting chamber 1. The arms 5 and the shaft/s 7 can be made of metal or plastic or some composite material (e.g. epoxy-fibreglass). Each shaft/s 7 is supported at each end by means of a bearing 8 in endplates 3', 4' fixed to the respective ends of the composting chamber 1.

The direction of airflow is generally counter-current to the direction of compost material flow. Forced aeration through the mass of composting material may also be necessary through ports (not shown) in the chamber wall on the underside of the compost mix, or through the central shaft or arms, and provided using a fan or compressed air system (not shown). The air speed through the system is controlled and is determined by the carbon dioxide content of the headspace and by the temperature of the air in the headspace of the composting unit. The air is removed via a single aperture at the feed end of the chamber, above the composting material and is either drawn via a fan, or ducted via a valve to the external atmosphere or to an odour-controlling device such as a biofilter (not shown).

In the example the shaft 7 runs both central and concentric to the chamber 1 and has a series of paddles 6 that are arranged in a single helix about the central shaft. The positioning and spacing of these arms is such that when the shaft is turned they move the material along the cylindrical chamber 1 of the compost unit. The material is moved by a drive mechanism either towards the exit or the feed direction, by rotating the shaft in opposite directions, can be reversed to allow for control of the residence time within the unit, while maintaining regular movement and therefore aeration of the composting mix. When moving the material toward an outlet 10 the arms 5 allow the material to be discharged through the outlet 10.

The composting unit is powered by a 3-phase electric motor directly coupled to a reduction gearbox 9 at the outlet end 4. Single-phase mains electricity or direct current electricity from solar cells, as well as hydraulic power packs, are other examples of possible power supplies which may be used to drive the drive mechanism. The drive mechanism may be mounted as a single system at either end of the shaft or may be configured as a dual drive system with a drive at both ends of the shaft/s.

In use, the operation of the composting system is controlled by a microprocessor-*based controller (e.g. PLC or computer, etc). This controls the movement of the shaft* and arms and therefore the residence time so that the composted material discharged from the outlet 10 in the end 4 of the chamber meets the required specifications in terms of odour, maturity and disinfection against pathogens. The controller also controls the feed and exit systems connected to the composting system in order to regulate the amount of material entering the system and to convey the material away from the outlet of the system.

The controller also controls the fan or valve, which regulates the air flowing through the system. The air flow rate is dictated by a combination of the carbon dioxide in the headspace of the compost unit and the temperature of the headspace. Generally the carbon dioxide level must be below 5% in the headspace to allow the growth of aerobic microbes within the mix. The fan speed is reduced when cold air outside causes the headspace to fall below a set temperature to a speed that allows the requirement for CO₂ concentration to be maintained.

Software, written for the express purpose, records the motor current to ensure that the specifications for the motor and gearbox are not exceeded. The PLC. also records the temperatures of the compost mix, which is measured through a series of thermocouples mounted through the wall of the composting chamber and protruding into the mix. These may be mounted into the base or side of the chamber. Another thermocouple monitors the temperature of the headspace of the chamber. Another probe monitors the carbon dioxide content of the headspace. Temperature recording is important with respect to ensuring, and demonstrating, adequate disinfection for pathogens. The control system can be accessed, controlled and interrogated from a remote site. A centralised control system may be used to control a number of units on a single site or a number of units on a number of sites. The data collected by the control system can automatically be collated and fed back to the composting operators. It may also be used to automatically regulate the composting systems operation to ensure that the compost meets the required specifications

Where in the description particular mechanical integers are described it is envisaged that their mechanical equivalents can be substituted as if they were mentioned herein.

A particular example of the invention has been described and it is envisaged that improvements and modifications can take place without departing from the scope thereof.

## Claims

1. A composting system including a substantially horizontal composting chamber constructed as a stationary, covered channel which is fully enclosed or a stationary, substantially cylindrical vessel, the chamber being adapted so that air emissions from within the chamber can be controlled, the chamber including an internal transport system which conveys composting material from one end of the chamber to the other in a continuous or batch process, the transport system is based on a substantially central shaft, or series of shafts substantially about the centre of the chamber which have a series of discrete arms that extend into the outer volume of the chamber, the discrete arms being arranged in a helical fashion about the shaft(s) such that when the shaft(s) are rotated they move the material in one direction or the other along the chamber, depending on the direction of rotation of the shaft(s), the transport system being under the control of a microprocessor based system which records inputs from various probes about the chamber which determine the optimal air speed as a function of the headspace air temperature and gaseous content in the chamber.

2. A composting system as claimed in claim 1 wherein the chamber is constructed from a single insulating and structurally sound material or from two or more layers of material, at least one of which provides insulation.

3. A composting system as claimed in claim 1 or claim 2 wherein the chamber is unheated and the efficacy of the system relies on controlling the heat naturally produced in the composting process.

4. A composting system as claimed in claim 1 or claim 2 wherein the chamber is provided with heat from an additional source.

5. A composting system as claimed in any one of the preceding claims wherein the discrete arms are tines or paddles or other appendages which are arranged in a helical fashion about the shaft(s) such that when the shafts(s) are rotated they move the material in one direction or the other along the chamber, depending on the direction of rotation of the shaft(s).

6. A composting system as claimed in any one of the preceding claims wherein the transport system is operated by a drive mechanism, which can be either a single system at one end of the shaft(s) or a dual system with a drive at each end of the shaft(s).

7. A composting system as claimed in claim 6 wherein the drive system is an electric motor(s) coupled to a reduction gearbox/es.

8. A composting system as claimed in claim 7 wherein the electric motor is powered by single- or three- phase mains electricity or direct current electricity from solar cells.

9. A composting system as claimed in claim 6 wherein the drive mechanism is a hydraulic drive system(s).

10. A composting system as claimed in any one of the preceding claims wherein the internal transport system is designed so that the appendages serve to mix the incoming composting material, to break up any agglomerates within the material and "fold" air into the composting material.

11. A composting system as claimed in claim 1 which is run as a batch process by filling the chamber and then equalising the movement of the shaft(s) in the opposing directions and by closing off the exit end of the system.

12. A composting system as claimed in claim 11 where the combinations of movement in opposite directions of the internal transport system serve to control the residence time of the material within the chamber and therefore maintain the specifications of the material exiting from the system.

13. A composting system as claimed in any one of claims 1 to 10 where the material can be fed in continuously or semi-continuously at one end and ejected at the other end of the chamber with the required residence time.

14. A composting system as claimed in any one of the preceding claims where in addition to the air introduced into the mix via the transport system, air is also drawn over the mix in a direction counter to the general flow of the material to avoid re-infection of the composted material by pathogens contained within the unprocessed feed material and to avoid reintroducing moisture into the composted material from steam being conducted by the airflow.

15. A composting system as claimed in claim 14 where the air is removed at the feed end of the chamber, and is either ejected via a fan or ducted via a valve to the external atmosphere or to an odour-controlling device such as a biofilter.

16. A composting system as claimed in claim 14 or claim 15 where additional air is injected into the composting material through the base of the chamber or through the shaft/s.

17. A composting system as claimed in any one of the preceding claims wherein the chamber is installed such that the exit end is higher than the inlet end with a minimum gradient of 1:100.

18. A composting system as claimed in any one of the preceding claims wherein a feed system is used to present the material to be composted to the inlet of the chamber and another system is used to remove the compost from the exit area of the chamber.

19. A compost system as claimed in claim 18 wherein the feed system is an auger(s) or conveyor(s).

20. A compost system as claimed in claim 18 or claim 19 wherein the exit system is an auger(s) or conveyor(s) or a bin that is regularly emptied via other means.

21. A composting system as claimed in any one of the preceding claims which incorporates a number of probes through the exterior of the chamber which extend into the headspace of the chamber, or into the composting mix, in order to measure temperature and carbon dioxide levels within the chamber.

22. A composting system as claimed in claim 21 wherein the carbon dioxide content of air in the chamber is maintained at a level of less than 5%.

23. A composting system as claimed in claim 22, which is controlled by a microprocessor based system, such as a PLC or computer, with data recording capabilities.

24. A composting system as claimed in claim 22 wherein the microprocessor based system incorporates software written for the specific purpose which records the input from the various probes about the chamber.

25. A composting system as claimed in claim 22 or claim 23 which monitors the current of the drive motor(s) to ensure that the torque of the transport system does not exceed the specifications of the transport system and drive mechanism and this system controls the movement and direction of the internal transport system and infeed system to the compost and optionally it can control any exit system used to convey the material away from the chamber.

26. A composting system as claimed in claim 24 wherein the microprocessor system also controls the air speed of the air flowing over the composting material by the control of the speed of a fan, or a valve.

27. A composting system as claimed in any one of the preceding claims wherein the control system is operated remotely using software expressly written for the purpose.

28. A composting system as claimed in claim 26 or claim 27 where the control system is operated remotely via a centralised system, which controls a number of sites, the centralised system can provide feedback on composting conditions to operators and it can, using software expressly written for the purpose, use the parameters recorded from the chamber(s) to automatically regulate the residence time(s) and therefore meet the specifications of the composted material(s).

## Patentansprüche

1. Kompostiersystem, umfassend eine im Wesentlichen horizontale Kompostierkammer, welche konstruiert ist als ortsfester, abgedeckter Kanal, der vollständig umschlossen ist, oder als ortsfester, im Wesentlichen zylindrischer Behälter, wobei die Kammer so angepasst ist, dass Luftemissionen aus dem Inneren der Kammer kontrolliert bzw. gesteuert werden können, wobei die Kammer ein internes Transportsystem beinhaltet, welches Kompostiermaterial vom einen Ende der Kammer zum anderen in einem kontinuierlichen oder einem schubweisen Prozess transportiert, das Transportsystem beruht auf einer im Wesentlichen mittleren Welle oder auf einer Serie von Wellen im Wesentlichen um die Mitte der Kammer, die eine Reihe von einzelnen Armen aufweisen, die sich in das äußere Volumen der Kammer erstrecken, wobei die einzelnen Arme in wendelförmiger Weise um die Welle(n) angeordnet sind, so dass die Welle(n), wenn sie gedreht wird bzw. werden, das Material in die eine oder die andere Richtung entlang der Kammer bewegt bzw. bewegen, und zwar in Abhängigkeit von der Rotationsrichtung der Welle(n), wobei sich das Transportsystem unter der Steuerung eines mikroprozessorbasierten Systems befindet, welches Eingaben aus verschiedenen Sonden über die Kammer aufnimmt, welche die optimale Luftgeschwindigkeit als Funktion der Gasraumlufttemperatur und des gasförmigen Gehalts in der Kammer bestimmen.

2. Kompostiersystem nach Anspruch 1, wobei die Kammer aus einem einzigen isolierenden und strukturell intakten Material oder aus zwei oder mehreren Materialschichten konstruiert ist, von denen zumindest eine Isolierung bietet.

3. Kompostiersystem nach Anspruch 1 oder Anspruch 2, wobei die Kammer nicht beheizt ist und die Wirksamkeit des Systems auf dem Regulieren der beim Kompostiervorgang in natürlicher Weise erzeugten Wärme beruht.

4. Kompostiersystem nach Anspruch 1 oder Anspruch 2, wobei die Kammer mit Wärme aus einer zusätzlichen Quelle versorgt wird.

5. Kompostiersystem nach einem der vorangehenden Ansprüche, wobei die einzelnen Arme Zinken oder Schaufelblätter oder andere Fortsätze sind, die in wendelförmiger Weise um die Welle(n) angeordnet sind, so dass die Welle(n), wenn sie gedreht wird bzw. werden, das Material in die eine oder die andere Richtung entlang der Kammer bewegen, und zwar in Abhängigkeit von der Rotationsrichtung der Welle(n).

6. Kompostiersystem nach einem der vorangehenden Ansprüche, wobei das Transportsystem durch einen Antriebsmechanismus betätigt wird, der entweder ein Einzelsystem an einem Ende der Welle(n) oder ein Dualsystem mit einem Antrieb an jedem Ende der Welle(n) sein kann.

7. Kompostiersystem nach Anspruch 6, wobei das Antriebssystem in einem Elektromotor bzw. in Elektromotoren besteht, der bzw. die an (ein) Untersetzungsgetriebe gekoppelt ist bzw. sind.

8. Kompostiersystem nach Anspruch 7, wobei der Elektromotor durch ein- oder dreiphasigen elektrischen Strom aus dem Netz oder durch elektrischen Gleichstrom aus Solarzellen gespeist wird.

9. Kompostiersystem nach Anspruch 6, wobei der Antriebsmechanismus in einem hydraulischen Antriebsystem bzw. in hydraulischen Antriebssystemen besteht.

10. Kompostiersystem nach einem der vorangehenden Ansprüche, wobei das interne Transportsystem so entworfen ist, dass die Fortsätze dazu dienen, das ankommende Kompostiermaterial zu mischen, jegliche Zusammenballungen innerhalb des Materials auseinanderzubrechen und Luft unter das Kompostiermaterial zu heben.

11. Kompostiersystem nach Anspruch 1, das als schubweiser Prozess ausgeführt wird, indem die Kammer gefüllt wird und dann die Bewegung der Welle(n) in die entgegengesetzten Richtungen abgeglichen wird und indem das Ausgangsende des Systems verschlossen wird.

12. Kompostiersystem nach Anspruch 11, wobei die Kombinationen von Bewegung in entgegengesetzte Richtungen des internen Transportsystems dazu dienen, die Verweildauer des Materials in der Kammer zu kontrollieren und somit die Spezifikationen für das Material aufrechtzuerhalten, welches das System verlässt.

13. Kompostiersystem nach einem der Ansprüche 1 bis 10, wobei das Material kontinuierlich oder halbkontinuierlich an einem Ende eingegeben und am anderen Ende der Kammer ausgeworfen werden kann unter Wahrung der erforderlichen Verweildauer.

14. Kompostiersystem nach einem der vorangehenden Ansprüche, wobei zusätzlich zu der Luft, die in die Mischung via das Transportsystem eingelassen wird, ferner Luft über die Mischung in einer Richtung entgegen dem allgemeinen Fluss des Materials gesogen wird, um die erneute Infektion des kompostierten Materials durch Pathogene, die im unverarbeiteten Einfüllmaterial enthalten sind, zu vermeiden und um das Wiedereinbringen von Feuchtigkeit in das kompostierte Material ausgehend von Dampf zu verhindern, der vom Luftstrom mitgeführt wird.

15. Kompostiersystem nach Anspruch 14, wobei die Luft am Einfüllende der Kammer entfernt wird, und entweder via ein Gebläse ausgestoßen wird oder via ein Ventil zur äußeren Atmosphäre oder zu einer Geruchskontrollvorrichtung, wie z.B. einem Biofilter, geleitet wird.

16. Kompostiersystem nach Anspruch 14 oder Anspruch 15, wobei zusätzliche Luft in das Kompostiermaterial durch die Basis der Kammer oder durch die Welle(n) eingespeist wird.

17. Kompostiersystem nach einem der vorangehenden Ansprüche, wobei die Kammer so installiert ist, dass das Ausgangsende höher ist als das Einlassende mit einem Mindestgradienten von 1:100.

18. Kompostiersystem nach einem der vorangehenden Ansprüche, wobei ein Zufuhrsystem eingesetzt wird, um das zu kompostierende Material zum Einlass der Kammer zu bringen, und ein weiteres System eingesetzt wird, um den Kompost aus dem Ausgangsbereich der Kammer zu entfernen.

19. Kompostiersystem nach Anspruch 18, wobei das Zufuhrsystem in einer Förderschnecke bzw. in Förderschnecken oder in einem Förderband bzw. in Förderbändern besteht.

20. Kompostiersystem nach Anspruch 18 oder Anspruch 19, wobei das Ausgangssystem in einer Förderschnecke bzw. in Förderschnecken oder in einem Förderband bzw. in Förderbändern oder in einem Kübel besteht, der regelmäßig mithilfe anderer Mitteln geleert wird.

21. Kompostiersystem nach einem der vorangehenden Ansprüche, das eine Anzahl von Sonden durch das Äußere der Kammer aufnimmt, die sich in den Gasraum der Kammer, oder in die Kompostiermischung, erstrecken, um Temperaturhöhen und Kohlendioxidspiegel im Innern der Kammer zu messen.

22. Kompostiersystem nach Anspruch 21, wobei der Kohlendioxidgehalt der Luft in der Kammer auf einem Spiegel unter 5% gehalten wird.

23. Kompostiersystem nach Anspruch 22, das von einem mikroprozessorbasierten System, wie z.B. einem PLC (programmierbarer Logik-Controller) oder einem Computer, mit Fähigkeiten zur Datenaufzeichnung gesteuert wird.

24. Kompostiersystem nach Anspruch 22, wobei das mikroprozessorbasierte System für den spezifischen Zweck geschriebene Software enthält, welche die Eingaben aus den verschiedenen Sonden über die Kammer aufzeichnet.

25. Kompostiersystem nach Anspruch 22 oder Anspruch 23, das den Strom des Antriebsmotors bzw. der Antriebsmotoren überwacht, um zu gewährleisten, dass das Drehmoment des Transportsystems die Spezifikationen des Transportsystems und des Antriebsmechanismus nicht überschreitet, und dieses System steuert die Bewegung und die Richtung des internen Transportsystems und des Zubringersystems zum Kompost, und gegebenenfalls kann es jedes beliebige Ausgangssystem steuern, das eingesetzt wird, um das Material von der Kammer weg zu transportieren.

26. Kompostiersystem nach Anspruch 24, wobei das Mikroprozessorsystem weiterhin die Luftgeschwindigkeit der Luft, die über das Kompostiermaterial strömt, durch die Steuerung der Geschwindigkeit eines Gebläses oder eines Ventils kontrolliert.

27. Kompostiersystem nach einem der vorangehenden Ansprüche, wobei das Steuerungssystem mittels Software fernbedient wird, die ausdrücklich für diesen Zweck geschrieben ist.

28. Kompostiersystem nach Anspruch 26 oder Anspruch 27, wobei das Steuerungssystem via ein zentralisiertes System fernbedient wird, das eine Anzahl von Anlagen steuert, wobei das zentralisierte System in der Lage ist, Rückmeldungen über Kompostierbedingungen für Bediener zur Verfügung zu stellen, und es unter Verwendung ausdrücklich für diesen Zweck geschriebener Software die aufgezeichneten Parameter aus der Kammer bzw. den Kammern verwenden kann, um die Verweildauer(n) automatisch zu regulieren und somit die Spezifikationen für das kompostierte Material bzw. die kompostierten Materialien zu erfüllen.

## Revendications

1. Système de compostage comprenant une chambre de compostage sensiblement horizontale construite sous forme d'un conduit fixe couvert qui est entièrement fermé, ou d'une cuve fixe, sensiblement cylindrique, la chambre étant adaptée de telle manière que les émissions d'air depuis l'intérieur de la chambre puissent être contrôlées, la chambre comprenant un système de transport intérieur qui transporte la matière en compostage d'une extrémité de la chambre à l'autre suivant un procédé continu ou discontinu, le système de transport étant à base d'un arbre sensiblement central, ou d'un ensemble d'arbres positionnés sensiblement au voisinage du centre de la chambre et qui comportent un ensemble de bras distincts s'étendant vers l'intérieur du volume extérieur de la chambre, les bras distincts étant disposés de manière hélicoïdale autour du ou des arbres de telle manière que, lorsque l'on fait tourner le ou les arbres, lesdits bras déplacent la matière dans un sens ou dans l'autre le long de la chambre, en fonction du sens de rotation du ou des arbres, le système de transport étant commandé par un système à base de microprocesseur qui collecte des données d'entrée à partir de plusieurs sondes disposées à l'intérieur de la chambre qui déterminent la vitesse d'air optimale en fonction de la température de l'air dans l'espace de tête et du contenu gazeux dans la chambre.

2. Système de compostage selon la revendication 1, dans lequel la chambre est construite en un unique matériau isolant et résistant structurellement ou en deux couches de matériau, ou plus, dont au moins une procure une isolation.

3. Système de compostage selon la revendication 1 ou la revendication 2, dans lequel la chambre n'est pas chauffée et l'efficacité du système est basée sur le contrôle de la chaleur produite naturellement pendant le procédé de compostage.

4. Système de compostage selon la revendication 1 ou la revendication 2, dans lequel la chambre reçoit de la chaleur à partir d'une source supplémentaire.

5. Système de compostage selon l'une quelconque des revendications précédentes, dans lequel les bras distincts sont des dents ou des palettes ou autres appendices qui sont disposés de manière hélicoïdale autour du ou des arbres de telle manière que, lorsque l'on fait tourner l'arbre ou les arbres, lesdits bras déplacent la matière dans un sens ou dans l'autre le long de la chambre, en fonction du sens de rotation du ou des arbres.

6. Système de compostage selon l'une quelconque des revendications précédentes, dans lequel le système de transport est actionné par un mécanisme d'entraînement, ce dernier pouvant être soit un système unique agencé à une extrémité du ou des arbres soit un système double comportant un entraînement à chaque extrémité du ou des arbres.

7. Système de compostage selon la revendication 6, dans lequel le système d'entraînement est constitué par un ou plusieurs moteurs électriques couplés à un ou plusieurs réducteurs de vitesse.

8. Système de compostage selon la revendication 7, dans lequel le moteur électrique est alimenté électriquement depuis un réseau monophasé ou triphasé, ou en courant continu à partir de cellules solaires.

9. Système de compostage selon la revendication 6, dans lequel le mécanisme d'entraînement est constitué par un ou plusieurs systèmes d'entraînement hydraulique.

10. Système de compostage selon l'une quelconque des revendications précédentes, dans lequel le système de transport est conçu de telle manière que les appendices servent à mélanger la matière à composter entrante, à désintégrer les agglomérats présents à l'intérieur de la matière et à "insérer par retournement" de l'air dans la matière en compostage.

11. Système de compostage selon la revendication 1, qui est exploité selon un procédé discontinu en remplissant la chambre puis en égalisant le mouvement du ou des arbres dans des sens opposés et en refermant l'extrémité de sortie du système.

12. Système de compostage selon la revendication 11, dans lequel les combinaisons de mouvement dans des sens opposés du système de transport intérieur servent à régler le temps de séjour de la matière à l'intérieur de la chambre et par conséquent à maintenir les caractéristiques de la matière quittant le système.

13. Système de compostage selon l'une quelconque des revendications 1 à 10, dans lequel la matière peut être introduite de manière continue ou semi-continue à une extrémité et éjectée à l'autre extrémité de la chambre après un temps de séjour défini.

14. Système de compostage selon l'une quelconque des revendications précédentes, dans lequel, en plus de l'air introduit dans le mélange via le système de transport, de l'air est également amené en recouvrement du mélange dans un sens contraire au sens de l'écoulement général de la matière afin d'éviter une réinfection de la matière compostée par des agents pathogènes contenus à l'intérieur de la matière brute introduite et d'éviter la réintroduction d'humidité dans la matière compostée du fait de la vapeur transportée par l'écoulement d'air.

15. Système de compostage selon la revendication 14, dans lequel l'air est éliminé à l'extrémité d'entrée de la chambre, et est soit éjecté via un ventilateur soit canalisé via un clapet vers l'atmosphère extérieure ou vers un dispositif de désodorisation tel qu'un filtre biologique.

16. Système de compostage selon la revendication 14, ou la revendication 15, dans lequel on injecte de l'air supplémentaire dans la matière en compostage à travers la base de la chambre ou à travers le ou les arbres.

17. Système de compostage selon l'une quelconque des revendications précédentes, dans lequel la chambre est installée de telle manière que l'extrémité de sortie soit plus élevée que l'extrémité d'entrée, avec une pente minimale égale à 1:100.

18. Système de compostage selon l'une quelconque des revendications précédentes, dans lequel un système d'alimentation est utilisé pour présenter la matière à composter à l'entrée de la chambre et un autre système est utilisé pour évacuer le compost de la zone de sortie de la chambre.

19. Système de compostage selon la revendication 18 dans lequel le système d'alimentation est constitué par une ou plusieurs vis transporteuses, ou convoyeurs.

20. Système de compostage selon la revendication 18 ou la revendication 19, dans lequel le système de sortie est constitué par une ou plusieurs vis transporteuses, ou convoyeurs, ou une trémie qui est régulièrement vidée par d'autres moyens.

21. Système de compostage selon l'une quelconque des revendications précédentes, qui incorpore une pluralité de sondes agencées à travers la partie extérieure de la chambre et s'étendant dans l'espace de tête de la chambre, ou à l'intérieur du mélange en compostage, de telle manière à mesurer les niveaux de température et de dioxyde de carbone à l'intérieur de la chambre.

22. Système de compostage selon la revendication 21, dans lequel la teneur en dioxyde de carbone de l'air présent dans la chambre est maintenue à un niveau inférieur à 5%.

23. Système de compostage selon la revendication 22, qui est commandé par un système à base de microprocesseur, tel qu'un automate programmable ou un ordinateur, avec possibilité de stocker des données.

24. Système de compostage selon la revendication 22, dans lequel le système à base de microprocesseur incorpore un logiciel écrit pour le besoin spécifique d'enregistrer les données fournies par les différentes sondes disposées à l'intérieur de la chambre.

25. Système de compostage selon la revendication 22 ou la revendication 23, qui régule le courant fourni au(x) moteur(s) d'entraînement de telle manière à assurer que la valeur de couple du système de transport ne dépasse pas les valeurs prescrites pour le système de transport et le mécanisme d'entraînement, et ledit système étant **caractérisé en ce qu'**il commande le mouvement et le sens du système de transport intérieur et du système d'alimentation vers le compost et, en option, peut commander un quelconque système d'évacuation utilisé pour transporter la matière hors de la chambre.

26. Système de compostage selon la revendication 24, dans lequel le système à base de microprocesseur règle également la vitesse d'écoulement d'air de l'air s'écoulant sur la matière en compostage par commande de la vitesse d'un ventilateur, ou d'un clapet.

27. Système de compostage selon l'une quelconque des revendications précédentes, dans lequel le système de commande est actionné à distance à l'aide d'un logiciel écrit spécialement à cet effet.

28. Système de compostage selon la revendication 26 ou la revendication 27, dans lequel le système de commande est actionné à distance via un système centralisé, lequel commande une pluralité de sites, ledit système centralisé pouvant fournir aux opérateurs une information de retour concernant les conditions du compostage et pouvant, au moyen d'un logiciel écrit spécialement à cet effet, utiliser les paramètres sauvegardés de la ou des chambres de manière à régler automatiquement le ou les temps de séjour et par conséquent satisfaire aux spécifications de la ou des matières compostées.
